# EUROPEAN PATENT SPECIFICATION

(11) **EP 4 075 264 B1**
(45) Date of publication and mention of the grant of the patent: **13.08.2025**
(21) Application number: 22020163.6
(22) Date of filing: 11.04.2022
(51) Int. Cl.: H04W 12/06, G06F 21/77, H04W 12/126, H04W 12/30, G06F 8/61, H04L 9/40

(54) **INITIALIZATION AND PERSONALIZATION OF A UICC**
INITIALISIERUNG UND PERSONALISIERUNG EINES UICC
INITIALISATION ET PERSONNALISATION D'UN UICC

(30) Priority: 12.04.2021 DE 102021001883
(43) Date of publication of application: 19.10.2022
(73) Proprietor: Giesecke+Devrient Mobile Security Germany GmbH, 81677 München (DE)
(72) Inventor: Shingnapurkar, Rushikesh, 411038 Pune (IN); Namjoshi, Yogendra Anant, 411021 Pune (IN)
(74) Representative: Giesecke+Devrient IP

(56) References cited:
- EP-A1- 3 023 925
- EP-B1- 2 656 645
- DE-A1- 102018 005 284
- US-A1- 2002 040 936
- US-A1- 2007 095 927

## Description

### Field of the invention

The present invention relates to the process of initialization of a UICC by programming an operating system OS into the UICC, and of personalization of a UICC.

### Background of the invention

Any UICC irrespective of its form factor - for example plug-in SIM card or embedded eUICC for soldering into a mobile device - requires to be initialized in that basic customer UICC-specific keys are programmed into the UICC and an encrypted operating system is programmed into the UICC. Inside the UICC, the encrypted operating system is decrypted with a UICC-specific decryption key and installed in the UICC. Afterwards, the UICC is personalized by programming unique customer personalization data into the UICC.

Loading of the operating system into the UICC is performed by a UICC resident software tool called bootloader. Initially a master UICC is programmed with an operating system by sending a sequence of commands to the UICC. Once the master UICC is provided with the operating system, a memory image (mostly a flash image) is taken from the UICC non-volatile memory NVM (mostly flash memory), the so-called Production Image. For mass production of UICCs, the UICCs are programmed with an operating system in that the production image is loaded into the UICC.

Personalization of the UICC is performed by a UICC resident software tool called command dispatcher. Personalization of the UICC is performed in that the UICC resident command dispatcher receives and processes a sequence of personalization commands, with the result to personalize the UICC.

The sequence of personalization commands are, in one alternative, received by the UICC, and more precisely by the command dispatcher, from a personalization station. In a second alternative, the personalization commands are received by the UICC, and more precisely by the command dispatcher, UICC internally from an encrypted container, resident in the UICC, that stores the sequence of personalization commands.

This procedure is also called in-factory personalization or IFP.

The document EP3023925A1 of the prior art discloses a method for personalizing a chip, comprising, see Fig. 4: loading an operating system OS to the chip, afterwards executing mutual authentication between the chip and a personalization station, and finally personalization of the chip by the personalization station.

Typically UICCs are initialized at a site of a semiconductor vendor or at a site of an original equipment manufacturer (OEM). For this, an operating system OS of an OS owner is provided to the semiconductor vendor or OEM and is programmed into the UICC at the site of the semiconductor vendor or OEM. Often, semiconductor vendors or OEMs initialize UICCs with operating systems from several different OS owners. A semiconductor vendor or OEM programming UICCs for several OS owners could hand over the operating system OS and decryption key of a particular OS owner to a third party site, especially to one of different OS owners having their UICC programmed at same site, abusively and without permission of the OS owner.

US 2007/095927 A1 describes a system and method for initializing secure elements for use in mobile devices. A mobile device manufacturer embeds uninitialized secure elements into mobile devices. An issuer-specific seed value is securely passed into an initialization routine in the operating system of the secure element. The initialization routine diversifies the initial root keys on the secure element with the issuer seed and the unique chip serial number to create master and chip keys for use in secure communications between the issuer and the mobile device user.

EP 3 023 925 A1 describes a secure element in the form of a chip comprising a processor and a nonvolatile, re-writable, memory on which have been stored at least a first application in a first portion of the memory and a second application in a second portion of the memory.

US 2002/040936 A1 describes a smart card architecture including a run-time environment, a card manager, one or more security domains, a provider application and an issuer application. One or more APIs provide communication.

EP 2 656 645 B1 describes a method which uses policy control tables stored in a trusted service manager registry and/or a smartcard's data store. By maintaining the policy control table, any MNO subscription may be downloaded / activated on the smartcard, but the device will be prevented from accessing the desired MNO because that access would violate the lock rules.

DE 10 2018 005284 A1 describes a method for chip personalization of an embedded system, in which an operating system and personalization data provided on an image server of a data provider are implemented in the chip by a third party different from the data provider.

### Objective of the invention

It is an object of the present invention to prevent abusive spreading of operating systems of OS owners for UICCs to non-authorized UICCs.

### Summary of the invention

In addition to the normal OS Production Image content, the OS Image contains an OS-owner specific lock-key. After loading of the Production Image for the OS to the UICC, the command dispatcher locks UICC. The UICC may be programmed at the third party production site or may be moved from the semiconductor vendor to the OS owner (or issuer) site or to a third party production site. Only upon a prescribed procedure of unlocking with an unlock-key - which can e.g. be identical to the lock-key in case of symmetric cryptography -, the command dispatcher is unlocked, and personalization commands can be and are executed. The lock-key is NOT shared with the semiconductor vendor, however is kept at the OS owner.

The personalization can be executed at a third party site remote from the location of the personalization station. In this case, at the third party site, there is located a Hardware Security Module (HSM) that securely stores the unlock-key or lock-key. This way of personalization is also called third party production. During third party production, the personalization station I accesses remotely the Hardware Security Module (HSM) to access the unlock-key/lock-key and unlock the command dispatcher.

Preferably the prescribed unlocking procedure requires authentication, more preferably session based authentication, e.g. SCP02/03, versus the command dispatcher with the lock-key. During this session the new random lock-key RKn is updated with UICC that shall be used for future verification/authentication. The n depends on number of session with lock-key.

The command dispatcher is permanently unlocked at the terminal command of the production called as FINAL state of the card when the production ends. Until then the command dispatcher stays unlocked in volatile memory.

To achieve the FINAL state, the mutual authentication is performed again with latest random key RKn. UICC immediately destroys the lock-key upon this state.

A third party having a foreign OS loaded to their UICC cannot personalize the UICC, since they are unable to unlock the locked command dispatcher.

In greater detail, the object of the invention is achieved by an embedded system with the following features, according to claim 1. Embodiments of the invention are presented in dependent claims.

The method for initialization of a UICC, comprises the steps:
(a) providing a UICC comprising a UICC-specific decryption key; (b) loading an encrypted OS image comprising an operating system into the UICC; (c) in the UICC, decrypting the encrypted OS image with the UICC-specific decryption key and installing the operating system in the UICC; (d) providing a command dispatcher to the UICC, the command dispatcher constructed to receive personalization commands from a personalization station, to process the received personalization commands and to thereby personalize the UICC.

The method is characterized by: (e) providing a lock-key to the UICC; (f) after installing the operating system in the UICC, locking the command dispatcher to enter a locked state in which the command dispatcher is unable to receive and/or to process personalization commands.

The locking of the Command Dispatcher has the advantage that even if operating systems are fraudulently dispensed to non-authorized UICCs, those UICCs cannot be further processed and set into operable state, thus making the fraudulent OS dispensing useless.

Preferably, the command dispatcher is locked such that it can be unlocked from the locked state by an unlock-key.

According to preferred embodiments, the command dispatcher is locked to the locked state such that for it to be unlocked, an authentication procedure between the UICC and a personalization station, using the unlock-key or a separate authentication key, is required.

According to a variants of the preferred embodiments, the command dispatcher is locked to the locked state such that two types of unlocking are provided.

For the command dispatcher to be temporarily unlocked, an authentication procedure between the UICC and a personalization station using the unlock-key or a separate authentication key is required. For the command dispatcher to be permanently unlocked, an authentication procedure between the UICC and a personalization station using the unlock-key or a separate authentication key is required, and in addition it is required that the card enters the final stage of the production using terminal command to switch to secure state.

A method of personalization of a UICC, comprises the steps: (g) providing a UICC comprising an operating system installed therein and a command dispatcher, wherein the command dispatcher is in a locked state in which the command dispatcher is unable to receive and/or to process personalization commands;
(h) providing a personalization station providing of an authorized unlock-key for the UICC; (i) by the personalization station, providing the authorized unlock-key using a Hardware Security Module to the UICC; (j) in the UICC, unlocking the command dispatcher by the authorized unlock-key; (k) personalizing the UICC by processing a sequence of personalization commands in the UICC.

According to a first type of embodiments, step (k) is executed with personalization commands received from externally on-the-fly, as (k1):
(k1-1) by the personalization station, or by a third party server, sending a sequence of personalization commands to the UICC;
(k1-2) in the UICC, receiving and processing the personalization commands from the personalization station, or from the third party server, to thereby personalize the UICC.

According to a second type of embodiments, step (k) is executed with personalization commands pre-stored in the UICC, in a container resident in the UICC, and having been received from externally at an earlier point in time, as (k2):
(k2-1) in the UICC, providing a container containing personalization commands;
(k2-2) in the UICC, reading and processing the personalization commands from the container, to thereby personalize the UICC.

According to preferred embodiments, as a requirement for step (j) of unlocking the command dispatcher, a step of an authentication procedure between the UICC and a personalization station using the unlock-key or a separate authentication key is required.

The method can further comprise the step of locking the command dispatcher, by the lock-key, to the locked state, upon or after personalization of the UICC is completed.

The method can further comprise the step of unlocking the command dispatcher, by the unlock-key, upon loading further software, particularly one or several applications, into the UICC.

According to some embodiments, the authentication procedure is a SCP02 or a SCP03 authentication procedure according to the Global Platform specification.

According to some embodiments, the authentication key is loaded to the UICC with or in the encrypted OS image.

The method can further comprise increasing a retry counter upon every failed authentication procedure, and resetting the retry counter upon a successful authentication procedure, wherein, when the retry counter reaches a predetermined count, the UICC is locked.

A UICC comprises a command dispatcher constructed to receive from a personalization station or from a third party server or to read from a UICC resident container personalization commands and to process the received or read personalization commands, and to thereby personalize the UICC. The UICC is characterized in that the command dispatcher comprises or is connected to a lock means constructed to: - lock the command dispatcher, by a lock-key, into a locked state, in which the command dispatcher is unable to receive and/or to process personalization commands; and - unlock the command dispatcher, by an unlock-key, from the locked state, so that the command dispatcher is able to receive and to process personalization commands from the personalization station.

### Brief description of the drawings

Embodiments of the invention will now be described with reference to the accompanying drawings, throughout which like parts are referred to by like references, and in which represents:
- Fig. 1: a flowchart depicting initialization and personalization of a UICC, using a Command Dispatcher that can be locked and unlocked, and a counter limiting the number of unlockings, according to an embodiment of the invention;
- Fig. 2: a diagram depicting a procedure of initialization and personalization of a UICC using a Command Dispatcher, involving a third party, according to an embodiment of the invention;
- Fig. 3: a diagram depicting a detailed procedure of initialization of a UICC using a Command Dispatcher, directly by a personalization station, according to an embodiment of the invention;
- Fig. 4: a diagram similar to the diagram of Fig. 3, including initialization and personalization of a UICC, and after the personalization, additional steps for updating the UICC, using a Command Dispatcher, according to an embodiment of the invention.

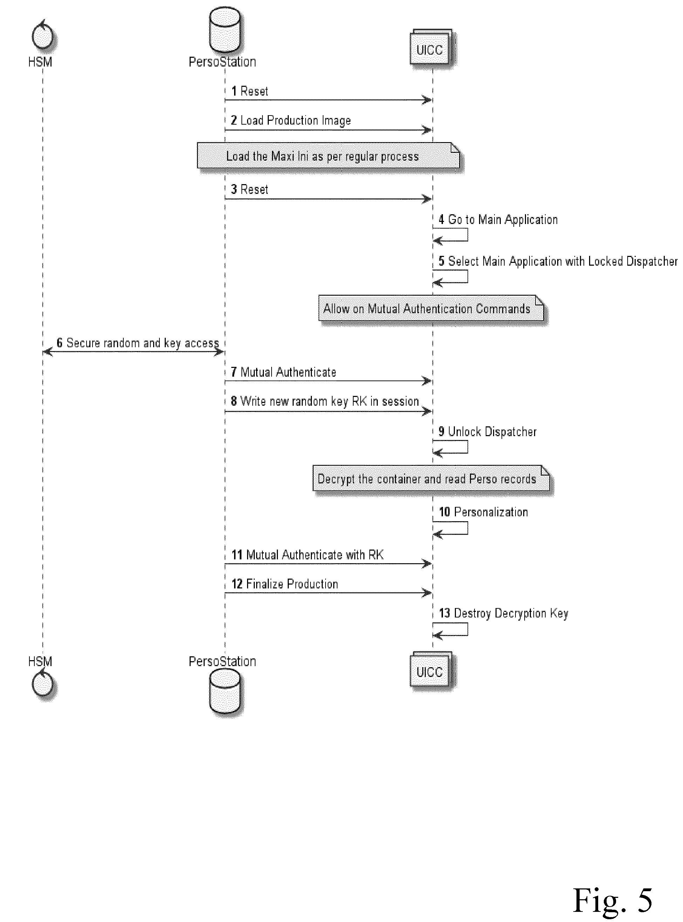

- Fig 5: a diagram similar to the diagram of Fig. 3, including initialization, and the personalization using in-factory personalization method, using a Command Dispatcher, according to an embodiment of the invention.

### Detailed description of the invention

The embodiments are directed to initialization and personalization of a UICC by a personalization station, and optionally a third party server. The UICC contains a Command Dispatcher. The initialization is performed by loading and storing a memory image Production Image containing at least an operating system for the UICC into the UICC. The personalization is performed in that a sequence of personalization commands is executed by the UICC resident Command Dispatcher. According to the invention, the Command Dispatcher can be locked and unlocked, and is locked after the initialization is finished. For being able to continue with personalization of the UICC, the Command Dispatcher has to be unlocked.

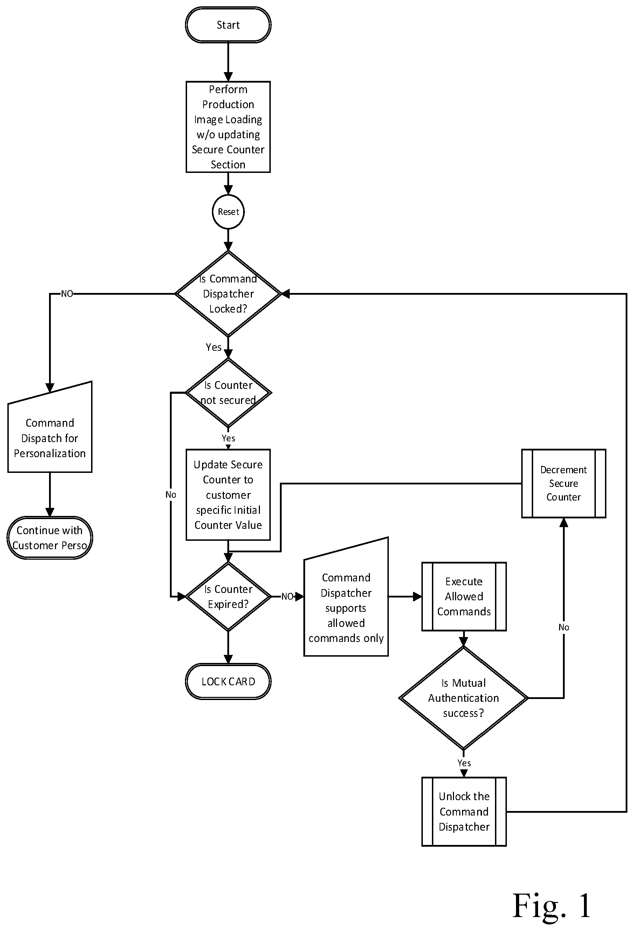

Fig. 1 shows a flowchart depicting initialization and personalization of a UICC, using a Command Dispatcher that can be locked and unlocked, and a counter limiting the number the number of failed authentications or/and the number of unlockings (retry counter), according to an embodiment of the invention. After start of the procedure, a memory image or Production Image is loaded into the UICC. After this, the UICC is reset. When the UICC restarts after reset, the further proceeding is dependent on a status of the Command Dispatcher. In case the Command Dispatcher is not locked, the known personalization of the UICC is executed. In case the Command Dispatcher is locked, unlocking is required before personalization can be executed. First, a status of a counter is checked. If the counter is not secured, the counter is updated to INI, a Defined Initial Counter Value, and then the count of the counter is checked so as to see if the counter is expired. If the counter is secured, the count of the counter is checked without previous update to initial value. If the counter is expired, which means the maximum allowable number of failed authentications or/and unlockings has already been reached, the UICC (card) is locked. If the counter is not yet expired, the Command Dispatcher allows only the commands INIT, UPDATE, EXTERNAL AUTHENTICATE (e.g. according to SCP02 or SCP03) and SELECT ISD (select Issuer Security Domain). The allowed command, if any, is or are executed. In case an executed authentication command, EXTERNAL AUTHENTICATE (e.g. according to SCP02 or SCP03) is non-successful, the counter is decremented (or alternatively incremented depending on type of counter implementation), and the process returns to check if the counter has expired. Only in case the executed authentication command, EXTERNAL AUTHENTICATE (e.g. according to SCP02 or SCP03) is successful, the Command Dispatcher is unlocked, and the personalization of the UICC is initiated.

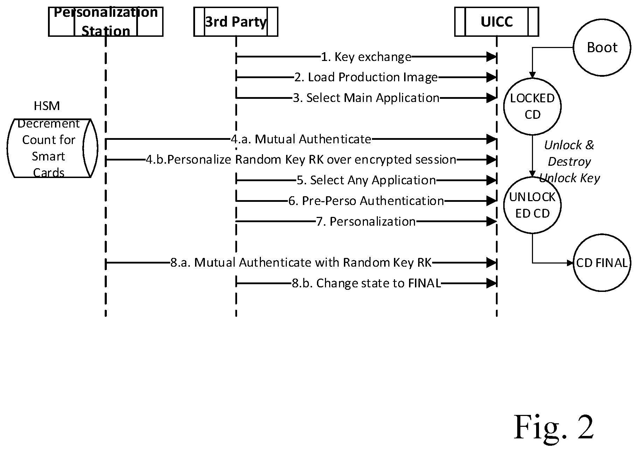

Fig. 2 shows a diagram depicting a procedure of initialization and personalization of a UICC by a third party server, in cooperation with a personalization station, using a Command Dispatcher resident in the UICC, according to an embodiment of the invention. Throughout the procedure, the UICC and the Command Dispatcher go through different states: Boot, Locked, Command Dispatcher CD OP-Ready, Command Dispatcher CD OP-Secure.

Fig. 2, Step 1: The UICC is in boot state. The third party server sends a key exchange message to the UICC to replace generic keys by more specific keys.

Fig. 2, Step 2: The third party server loads a Production Image (memory image, flash imge) containing at least an operating system to be implemented in the UICC to the UICC. The operating system is implemented to the UICC, and the Command Dispatcher is locked.

Fig. 2, Step 3: The personalization station sends an AUTHENTICATE command according to SCP02 or SCP03 to the UICC and, if required, decrements a counter controlling the number of unlocks of the Command Dispatcher, for example by a procedure as shown in Fig. 1.

Fig. 2, Step 4: The personalization station sends to the UICC a command to SELECT a particular Issuer Security Domain ISD, and the selected ISD is set to status SELECTED. The Command Dispatcher is set to state CD OP-Ready.

Fig. 2, Step 5: The third party server sends to the UICC a command to SELECT an Application Type, e.g. Telco.

Fig. 2, Step 6: The third party server sends to the UICC an Authenticate ADMS command.

Fig. 2, Step 7: The third party server sends to the UICC personalization commands. The UICC is personalized by processing the personalization commands in the UICC, y the command dispatcher.

Fig. 2, Step 8: The third party server sends to the UICC a command to change the state to OP-Secured. The Command Dispatcher enters state CD OP-Secure.

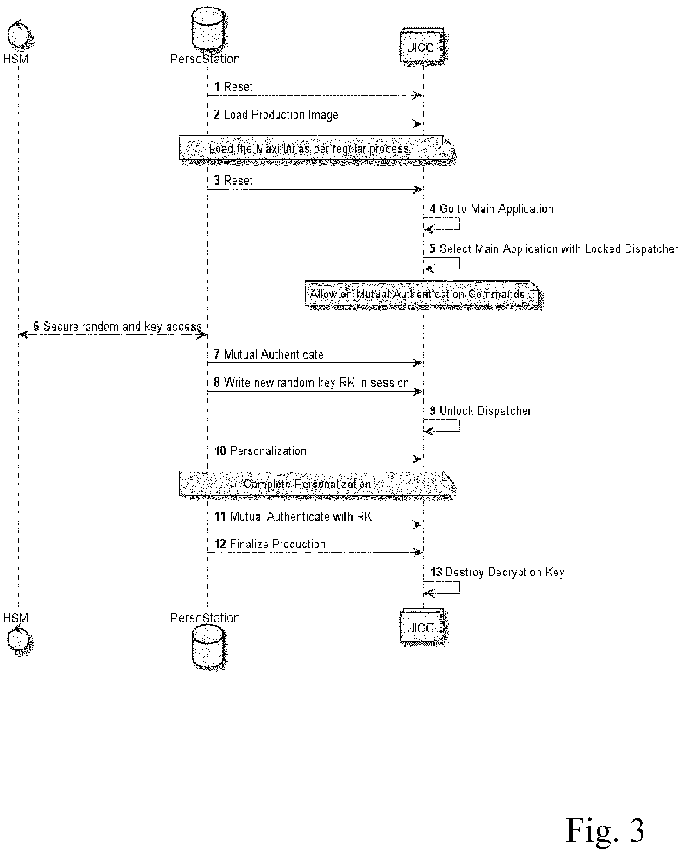

Fig. 3 shows a diagram depicting a procedure of initialization of a UICC using a Command Dispatcher, directly by a personalization station, according to an embodiment of the invention.

Fig. 3, Step 1: The personalization station sends a Reset command to the UICC. The UICC is reset.

Fig. 3, Step 2: The personalization station sends a key exchange message to the UICC to replace generic keys by more specific keys.

Fig. 3, Step 3: The personalization station loads a Production Image (memory image) containing at least an operating system to be implemented in the UICC to the UICC. The operating system is implemented to the UICC.

Fig. 3, Step 4: The personalization station sends a Reset command to the UICC. The UICC is reset.

Fig. 3, Step 5: The UICC internally starts the MD Client (MD = Main Dispatcher) resident in the UICC.

Fig. 3, Step 6: The MD Client in the UICC internally select an Issuer Security Domain ISD and Locks the Command Dispatcher resident in the UICC.

Now, only particular commands are allowed, for example similarly as shown in Fig. 1, or only INIT UPDATE, EXTERNAL AUTHENTICATE, SELECT ISD, GET DATA, GET FREESPACE.

Fig. 3, Step 7: The personalization station sends a INIT UPDATE command to the UICC. The operating system in the UICC is then updated with some data.

Fig. 3, Step 8: The personalization station sends a EXTERNAL AUTHENTICATE command to the UICC. By this, the personalization station authenticates itself versus the UICC.

The EXTERNAL AUTHENTICATE was successful, meaning that the personalization station has successfully authenticated itself versus the UICC.

Fig. 3, Step 9: Since the personalization station successfully authenticated itself versus the UICC, the UICC internally unlocks the Command Dispatcher, so as to enable receipt and processing personalization commands afterwards to be received from the personalization station.

Fig. 3, Step 10: The personalization station sends to the UICC a SELECT APPLICATION command an thereby selects a network application type operating system to be personalized.

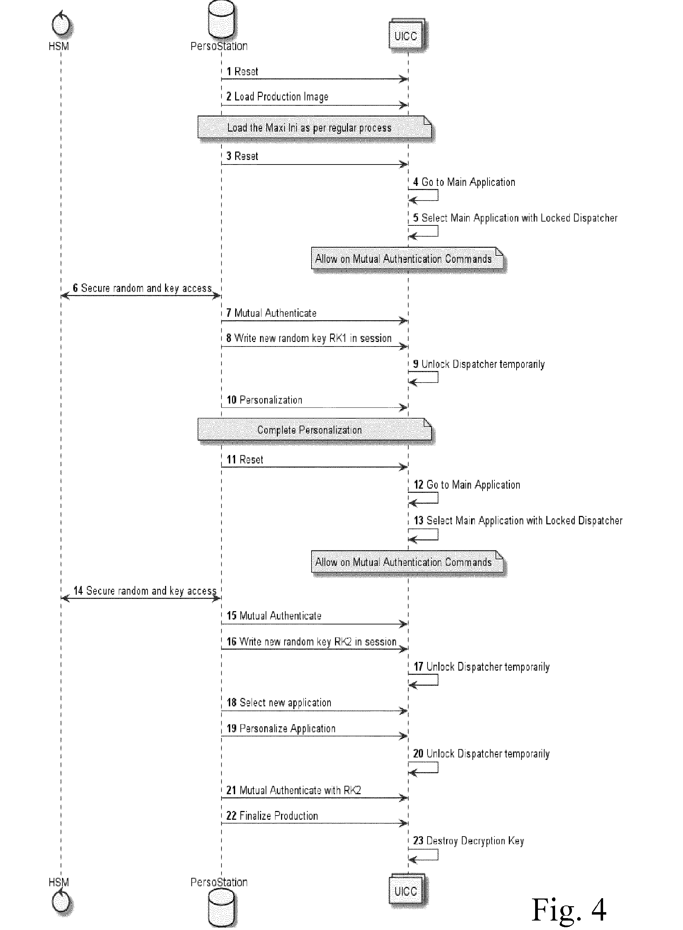

Afterwards, personalization of the UICC is executed, shown in detail in Fig. 4.

Fig. 4 shows a diagram similar to the diagram of Fig. 3, including initialization and personalization of a UICC, and after the personalization, additional steps for updating the UICC, using a Command Dispatcher, according to an embodiment of the invention.

Steps 1-10 of Fig. 4 are similar to steps 1-10 of Fig. 3, with the exception that in the embodiment of Fig. 4 unlocking of the Command Dispatcher is done using a RAM pointer, which can be done in the embodiment of Fig. 3 as well, or can be done other that by a RAM pointer in the embodiment of Fig. 4.

After Step 10, Select GSMA, so as to start the complete personalization:
Fig. 4, Step 11: The personalization station sends to the UICC a Reset command. The UICC is reset.

Fig. 4, Step 12: The (MD Client in the) UICC internally select an Issuer Security Domain ISD and Locks the Command Dispatcher resident in the UICC.

Now, only particular commands are allowed, for example similarly as shown in Fig. 1, or only INIT UPDATE, EXTERNAL AUTHENTICATE, SELECT ISD, GET DATA, GET FREESPACE.

Fig. 4, Step 13: The personalization station sends a INIT UPDATE command to the UICC. The operating system in the UICC is then updated with some data.

Fig. 4, Step 14: The personalization station UPPC sends a EXTERNAL AUTHENTICATE command to the UICC. By this, the personalization station authenticates itself versus the UICC.

The EXTERNAL AUTHENTICATE was successful, meaning that the personalization station UPPC has successfully authenticated itself versus the UICC.

Fig. 4, Step 15: Since the personalization station UPPC successfully authenticated itself versus the UICC, the UICC internally unlocks the Command Dispatcher, here e.g. by a RAM pointer, so as to enable receipt and processing personalization commands afterwards to be received from the personalization station.

Fig. 4, Step 16: The personalization station sends to the UICC a SELECT APPLICATION (can e.g. be a GSM application) command an thereby selects a (e.g. GSM type) applet to be personalized.

Fig. 4, Step 17: The personalization station sends to the UICC proprietary Applet commands, to thereby personalize the wanted (e.g. GSM) Applets.

Fig. 4, Step 18: The personalization station sends to the UICC a Set Status OP-SECURE command.

Fig. 4, Step 19: The UICC internally establishes the state OP-SECURE of the UICC and removes OTC++ code.

Fig. 4, Step 20: The UICC internally unlocks the Command Dispatcher using an NVM pointer.

Fig. 4, Step 21: The personalization station sends to the UICC a Reset command. The UICC is reset.

Fig. 4, Step 22: The UICC internally selects the Card Manager and hands over control to the Main Dispatcher.

Personalization of the UICC is completed.

In the embodiments of Fig. 3 and 4, some or most of the initialization and personalization steps executed by the personalization station UPPC can alternatively be done by a third party server, similar to the embodiment of Fig. 2. For the EXTERNAL AUTHENTICATE, so as to unlock the locked COMMAND DISPATCHER, always the personalization station UPPC is used.

## Claims

1. A method for initialization of a UICC, comprising the steps:
(a) providing a UICC comprising a UICC-specific decryption key;
(b) loading an encrypted OS image comprising an operating system into the UICC;
(c) in the UICC, decrypting the encrypted OS image with the UICC-specific decryption key and installing the operating system in the UICC;
(d) providing a command dispatcher to the UICC, the command dispatcher constructed to receive personalization commands from a personalization station, UPPC, to process the received personalization commands and to thereby personalize the UICC;
(e) providing a lock-key to the UICC;
(f) after installing the operating system in the UICC, locking the command dispatcher to enter a locked state in which the command dispatcher is unable to receive and/or to process personalization commands.

2. The method according to claim 1, wherein the command dispatcher is locked such that it can be unlocked from the locked state by an unlock-key.

3. The method according to claim 2, wherein the command dispatcher is locked to the locked state such that for it to be unlocked, an authentication procedure between the UICC and a personalization station using the unlock-key or a separate authentication key is required.

4. The method according to claim 3, wherein the command dispatcher is locked to the locked state such that
- for it to be temporarily unlocked, an authentication procedure between the UICC and a personalization station, using the unlock-key or a separate authentication key is required; and
- for it to be permanently unlocked, an authentication procedure between the UICC and a personalization station, using the unlock-key or a separate authentication key is required, and in addition it is required that the card enters the final stage of the production using terminal command to switch to secure state.

5. The method according to any of claims 3 or 4, wherein the authentication procedure is a SCP02 or a SCP03 authentication procedure according to the Global Platform specification.

6. The method according to claim 5, wherein the authentication key is loaded to the UICC with or in the encrypted OS image.

7. A method of personalization of a UICC, comprising the steps:
(g) providing a UICC comprising an operating system installed therein and a command dispatcher, wherein the command dispatcher is in a locked state in which the command dispatcher is unable to receive and/or to process personalization commands;
(h) providing a personalization station, providing of an authorized unlock-key for the UICC;
(i) by the personalization station, providing the authorized unlock-key using a Hardware Security Module to the UICC;
(j) in the UICC, unlocking the command dispatcher by the authorized unlock-key;
(k) personalizing the UICC by processing a sequence of personalization commands in the UICC.

8. The method according to claim 7, wherein step (k) is executed as either (k1) or (k2), with:
(k1)
(k1-1) by the personalization station, , or by a third party server, sending a sequence of personalization commands to the UICC;
(k1-2) in the UICC, receiving and processing the personalization commands from the personalization station, or from the third party server, to thereby personalize the UICC;
(k2)
(k2-1) in the UICC, providing a container containing personalization commands;
(k2-2) in the UICC, reading and processing the personalization commands from the container, to thereby personalize the UICC.

9. The method according to claim 7 or 8, further comprising, as a requirement for step (j) of unlocking the command dispatcher, a step of an authentication procedure between the UICC and a personalization station, using the unlock-key or a separate authentication key.

10. The method according to any of claims 7 or 9, further comprising the step of locking the command dispatcher, by the lock-key, to the locked state, upon or after personalization of the UICC is completed.

11. The method according to claim 10, further comprising the step of unlocking the command dispatcher, by the unlock-key, upon loading further software, particularly one or several applications, into the UICC.

12. The method according to claim 9, wherein the authentication procedure is a SCP02 or a SCP03 authentication procedure according to the Global Platform specification.

13. The method according to claim 12, wherein the authentication key is loaded to the UICC with or in an encrypted OS image.

14. The method according to claim 12 or 13, further comprising increasing a retry counter upon every failed authentication procedure, and resetting the retry counter upon a successful authentication procedure, wherein, when the retry counter reaches a predetermined count, the UICC is locked.

15. A UICC comprising a command dispatcher constructed to receive from a personalization station, or from a third party server or to read from a UICC resident container personalization commands and to process the received or read personalization commands, and to thereby personalize the UICC;
**characterized in that**
the command dispatcher comprises or is connected to a lock means constructed to:
- lock the command dispatcher, by a lock-key, into a locked state, in which the command dispatcher is unable to receive and/or to process personalization commands; and
- unlock the command dispatcher, by an unlock-key, from the locked state, so that the command dispatcher is able to receive and to process personalization commands from the personalization station.

## Patentansprüche

1. Verfahren zur Initialisierung einer UICC, das die folgenden Schritte umfasst:
(a) Bereitstellen einer UICC, die einen UICC-spezifischen Entschlüsselungsschlüssel umfasst;
(b) Laden eines verschlüsselten OS-Bildes, das ein Betriebssystem umfasst, in die UICC;
(c) Entschlüsseln des verschlüsselten OS-Bildes in der UICC mit dem UICC-spezifischen Entschlüsselungsschlüssel und Installieren des Betriebssystems in der UICC;
(d) Bereitstellen eines Befehlsverteilers an die UICC, wobei der Befehlsverteiler aufgebaut ist, Personalisierungsbefehle von einer Personalisierungsstation, UPPC, zu empfangen, um die empfangenen Personalisierungsbefehle zu verarbeiten und dadurch die UICC zu personalisieren;
(e) Bereitstellen eines Sperrschlüssels für die UICC;
(f) nach dem Installieren des Betriebssystems in der UICC, Sperren des Befehlsverteilers, um in einen gesperrten Zustand einzutreten, in dem der Befehlsverteiler keine Personalisierungsbefehle empfangen und/oder verarbeiten kann.

2. Verfahren nach Anspruch 1, wobei der Befehlsverteiler so gesperrt ist, dass er durch einen Entsperrungsschlüssel aus dem gesperrten Zustand entsperrt werden kann.

3. Verfahren nach Anspruch 2, wobei der Befehlsverteiler in den gesperrten Zustand so gesperrt ist, dass, um ihn zu entsperren, ein Authentifizierungsvorgang zwischen der UICC und einer Personalisierungsstation unter Verwendung des Entsperrungsschlüssels oder eines separaten Authentifizierungsschlüssels erforderlich ist.

4. Verfahren nach Anspruch 3, wobei der Befehlsverteiler in den gesperrten Zustand gesperrt ist, so dass
- um ihn vorübergehend zu entsperren, einen Authentifizierungsvorgang zwischen der UICC und einer Personalisierungsstation unter Verwendung des Entsperrungsschlüssels oder eines separaten Authentifizierungsschlüssels erforderlich ist; und
- um ihn dauerhaft zu entsperren, ein Authentifizierungsvorgang zwischen der UICC und einer Personalisierungsstation unter Verwendung des Entsperrungsschlüssels oder eines separaten Authentifizierungsschlüssels erforderlich ist, und darüber hinaus es erforderlich ist, dass die Karte unter Verwendung des Terminalbefehls in die Endphase der Produktion eintritt, um in den sicheren Zustand zu wechseln.

5. Verfahren nach einem der Ansprüche 3 oder 4, wobei der Authentifizierungsvorgang ein SCP02 - oder ein SCP03 - Authentifizierungsvorgang gemäß der Spezifikation der "Global Platform" ist.

6. Verfahren nach Anspruch 5, wobei der Authentifizierungsschlüssel mit oder in dem verschlüsselten OS-Bild in die UICC geladen wird.

7. Verfahren zur Personalisierung einer UICC, das die folgenden Schritte umfasst:
(g) Bereitstellen einer UICC, die ein darin installiertes Betriebssystem und einen Befehlsverteiler umfasst, wobei sich der Befehlsverteiler in einem gesperrten Zustand befindet, in dem der Befehlsverteiler keine Personalisierungsbefehle empfangen und/oder verarbeiten kann;
(h) Bereitstellen einer Personalisierungsstation, die einen autorisierten Entsperrungsschlüssel für die UICC bereitstellt;
(i) durch die Personalisierungsstation, die den autorisierten Entsperrungsschlüssel unter Verwendung eines Hardware-Sicherheitsmoduls an die UICC bereitstellt;
(j) in der UICC, Entsperren des Befehlsverteilers durch den autorisierten Entsperrungsschlüssel;
(k) Personalisieren der UICC durch Verarbeiten einer Sequenz von Personalisierungsbefehlen in der UICC.

8. Verfahren nach Anspruch 7, wobei Schritt (k) entweder als (k1) oder (k2) ausgeführt wird, mit:
(k1)
(k1-1) durch die Personalisierungsstation oder durch einen Server eines Dritten, der eine Sequenz von Personalisierungsbefehlen an die UICC sendet;
(k1-2) in der UICC, Empfangen und Verarbeiten der Personalisierungsbefehle von der Personalisierungsstation oder von dem Server eines Dritten, um dadurch die UICC zu personalisieren;
(k2)
(k2-1) in der UICC, Bereitstellen eines Containers, der Personalisierungsbefehle enthält;
(k2-2) in der UICC, Lesen und Verarbeiten der Personalisierungsbefehle aus dem Container, um dadurch die UICC zu personalisieren.

9. Verfahren nach Anspruch 7 oder 8, das ferner als ein Erfordernis für Schritt (j) des Entsperrens des Befehlsverteilers einen Schritt eines Authentifizierungsvorgangs zwischen der UICC und einer Personalisierungsstation unter Verwendung des Entsperrungsschlüssels oder eines separaten Authentifizierungsschlüssels umfasst.

10. Verfahren nach einem der Ansprüche 7 oder 9, das ferner den Schritt des Sperrens des Befehlsverteilers durch den Sperrschlüssel in den gesperrten Zustand umfasst, wenn oder nachdem die Personalisierung der UICC abgeschlossen ist.

11. Verfahren nach Anspruch 10, das ferner den Schritt des Entsperrens des Befehlsverteilers durch den Entsperrungsschlüssel beim Laden weiterer Software, insbesondere einer oder mehrerer Anwendungen, in die UICC umfasst.

12. Verfahren nach Anspruch 9, wobei der Authentifizierungsvorgang ein SCP02 - oder ein SCP03 - Authentifizierungsvorgang gemäß der Spezifikation der "Global Platform" ist.

13. Verfahren nach Anspruch 12, wobei der Authentifizierungsschlüssel mit oder in einem verschlüsselten OS-Bild in die UICC geladen wird.

14. Verfahren nach Anspruch 12 oder 13, das ferner das Erhöhen eines Wiederholungszählers bei jedem fehlgeschlagenen Authentifizierungsvorgang und das Zurücksetzen des Wiederholungszählers bei einem erfolgreichen Authentifizierungsvorgang umfasst, wobei, wenn der Wiederholungszähler einen vorbestimmten Zählerstand erreicht, die UICC gesperrt ist.

15. UICC, die einen Befehlsverteiler umfasst, der aufgebaut ist, von einer Personalisierungsstation oder von einem Server eines Dritten zu empfangen oder von einem in der UICC befindlichen Container-Personalisierungsbefehl zu lesen und die empfangenen oder gelesenen Personalisierungsbefehle zu verarbeiten und dadurch die UICC zu personalisieren;
**dadurch gekennzeichnet, dass**
der Befehlsverteiler ein Mittel zum Sperren umfasst oder mit diesem verbunden ist, das aufgebaut ist, um:
- den Befehlsverteiler durch einen Sperrschlüssel in einen gesperrten Zustand zu sperren, in dem der Befehlsverteiler keine Personalisierungsbefehle empfangen und/oder verarbeiten kann; und
- den Befehlsverteiler durch einen Entsperrungsschlüssel aus dem gesperrten Zustand so zu entsperren, dass der Befehlsverteiler Personalisierungsbefehle von der Personalisierungsstation empfangen und verarbeiten kann.

## Revendications

1. Procédé d'initialisation d'une carte UICC, le procédé comprenant les étapes suivantes :
(a) fournir une carte UICC comprenant une clé de décryptage spécifique à la carte UICC ;
(b) charger une image OS cryptée comprenant un système d'exploitation dans la carte UICC ;
(c) dans la carte UICC, décrypter l'image OS cryptée à l'aide de la clé de décryptage spécifique à la carte UICC et installer le système d'exploitation dans la carte UICC ;
(d) fournir un répartiteur de commandes à l'UICC, le répartiteur de commandes étant conçu pour recevoir des commandes de personnalisation provenant d'une station de personnalisation, UPPC, pour traiter les commandes de personnalisation reçues et pour personnaliser ainsi l'UICC ;
(e) fournir une clé de verrouillage à l'UICC ;
(f) après avoir installé le système d'exploitation dans l'UICC, verrouiller le répartiteur de commandes pour le mettre dans un état verrouillé dans lequel le répartiteur de commandes est incapable de recevoir et/ou de traiter des commandes de personnalisation.

2. Procédé selon la revendication 1, dans lequel le répartiteur de commandes est verrouillé de sorte qu'il puisse pas être déverrouillé de son état verrouillé par une clé de déverrouillage.

3. Procédé selon la revendication 2, dans lequel le répartiteur de commandes est verrouillé dans l'état verrouillé de telle sorte que, pour être déverrouillé, une procédure d'authentification entre l'UICC et une station de personnalisation utilisant la clé de déverrouillage ou une clé d'authentification séparée soit nécessaire.

4. Procédé selon la revendication 3, dans lequel le répartiteur de commandes est verrouillé dans l'état verrouillé de telle sorte que
- pour qu'il soit temporairement déverrouillé, une procédure d'authentification entre l'UICC et une station de personnalisation, utilisant la clé de déverrouillage ou une clé d'authentification séparée, est nécessaire ; et
- pour qu'il soit déverrouillé de manière permanente, une procédure d'authentification entre l'UICC et une station de personnalisation, à l'aide de la clé de déverrouillage ou d'une clé d'authentification distincte, est nécessaire et, en outre, il est nécessaire que la carte entre dans la phase finale de la production à l'aide d'une commande du terminal pour passer à l'état sécurisé.

5. Procédé selon l'une quelconque des revendications 3 ou 4, dans lequel la procédure d'authentification est une procédure d'authentification SCP02 ou SCP03 selon la spécification Global Platform.

6. Procédé selon la revendication 5, dans lequel la clé d'authentification est chargée dans l'UICC avec, ou dans, l'image d'OS cryptée.

7. Procédé de personnalisation d'une UICC, comprenant les étapes suivantes :
(g) fournir une UICC comprenant un système d'exploitation y étant installé et un répartiteur de commandes, où le répartiteur de commandes est dans un état verrouillé dans lequel le répartiteur de commandes est incapable de recevoir et/ou de traiter des commandes de personnalisation ;
(h) fournir une station de personnalisation, fournir une clé de déverrouillage autorisée pour l'UICC ;
(i) fournir, par la station de personnalisation, la clé de déverrouillage autorisée à l'UICC à l'aide d'un module de sécurité matériel ;
(j) déverrouiller, dans l'UICC, le répartiteur de commandes à l'aide de la clé de déverrouillage autorisée ;
(k) personnaliser l'UICC en traitant une séquence de commandes de personnalisation dans l'UICC.

8. Procédé selon la revendication 7, dans lequel l'étape (k) est exécutée comme (k1) ou (k2), avec :
(k1)
(k1-1) par la station de personnalisation, ou par un serveur tiers, l'envoi d'une séquence de commandes de personnalisation à l'UICC ;
(k1-2) dans l'UICC, la réception et le traitement des commandes de personnalisation provenant de la station de personnalisation, ou du serveur tiers, afin de personnaliser l'UICC ;
(k2)
(k2-1) dans l'UICC, la fourniture d'un conteneur contenant des commandes de personnalisation ;
(k2-2) dans l'UICC, la lecture et le traitement des commandes de personnalisation provenant du conteneur, afin de personnaliser ainsi l'UICC.

9. Procédé selon la revendication 7 ou la revendication 8, comprenant en outre, comme condition préalable à l'étape (j) de déverrouillage du répartiteur de commandes, une étape de procédure d'authentification entre l'UICC et une station de personnalisation, à l'aide de la clé de déverrouillage ou d'une clé d'authentification distincte.

10. Procédé selon l'une quelconque des revendications 7 ou 9, comprenant en outre l'étape comprenant de verrouiller le répartiteur de commandes, à l'aide de la clé de verrouillage, dans l'état verrouillé, lors de la fin de la personnalisation de l'UICC ou après celle-ci.

11. Procédé selon la revendication 10, comprenant en outre l'étape comprenant de déverrouiller le répartiteur de commandes, à l'aide de la clé de déverrouillage, lors du chargement d'un logiciel supplémentaire, en particulier d'une ou plusieurs applications, dans l'UICC.

12. Procédé selon la revendication 9, dans lequel la procédure d'authentification est une procédure d'authentification SCP02 ou SCP03 selon la spécification Global Platform.

13. Procédé selon la revendication 12, dans lequel la clé d'authentification est chargée dans l'UICC avec, ou dans, une image d'OS cryptée.

14. Procédé selon la revendication 12 ou la revendication 13, comprenant en outre d'incrémenter un compteur de tentatives à chaque échec de la procédure d'authentification, et de réinitialiser le compteur de tentatives lors d'une procédure d'authentification réussie, où, lorsque le compteur de tentatives atteint un nombre prédéterminé, l'UICC est verrouillée.

15. UICC comprenant un répartiteur de commandes conçu pour recevoir d'une station de personnalisation ou d'un serveur tiers ou pour lire dans un conteneur résidant dans l'UICC des commandes de personnalisation et pour traiter les commandes de personnalisation reçues ou lues, et pour personnaliser ainsi l'UICC ;
**caractérisée en ce que**
le répartiteur de commandes comprend, ou est connecté, à un moyen de verrouillage conçu pour :
- verrouiller le répartiteur de commandes, à l'aide d'une clé de verrouillage, dans un état verrouillé dans lequel le répartiteur de commandes est incapable de recevoir et/ou de traiter des commandes de personnalisation ; et
- déverrouiller le répartiteur de commandes, à l'aide d'une clé de déverrouillage, depuis l'état verrouillé, de sorte que le répartiteur de commandes soit capable de recevoir et de traiter des commandes de personnalisation provenant de la station de personnalisation.
